# EUROPÄISCHE PATENTSCHRIFT

(11) **EP 0 657 509 B1**
(45) Veröffentlichungstag und Bekanntmachung des Hinweises auf die Patenterteilung: **21.10.1998**
(21) Anmeldenummer: 94118411.1
(22) Anmeldetag: 23.11.1994
(51) Int. Cl.: C09B 69/10, C09D 11/00

(54) **Neue polymere Farbstoffe und ihre Verwendung in Tinten für ink jet-Druckverfahren**
Polymeric dyestuffs and their use in inks for ink jet printing process
Colorants polymériques et leur utilisation dans des encres pour procédé d'impression par jet d'encre

(30) Priorität: 06.12.1993 DE 4341455
(43) Veröffentlichungstag der Anmeldung: 14.06.1995
(73) Patentinhaber: BAYER AG, 51368 Leverkusen (DE)
(72) Erfinder: Mennicke, Dr. Winfried, D-51375 Leverkusen (DE); Hassenrück, Dr. Karin, D-40468 Düsseldorf (DE)

(56) Entgegenhaltungen:
- EP-A- 0 223 501
- EP-A- 0 317 859
- EP-A- 0 423 561

## Beschreibung

Die vorliegende Erfindung betrifft wasserlösliche, kovalent gebundene Polyamidamingruppen enthaltende polymere Farbstoffe und deren Verwendung zum Färben und Bedrucken von cellulose- und amidgruppenhaltigen Materialien sowie als Aufzeichnungsflüssigkeiten für Tintenstrahlaufzeichnungssysteme.

Polymere Farbstoffe auf Basis von Polyethylenimingruppen sind bekannt und beispielsweise in der Patentliteratur DE-A 2 018 855, DE-A 2 214 966, US-A 3 937 851, US-A 4 375 357, US-A 4 664 708, US-A 5 098 475 oder JA-A 5 927 973 beschrieben. Derartige polymere Farbstoffe weisen aber in vielen Fällen insbesondere unterhalb von pH 9 eine unzureichende Wasserlöslichkeit auf, so daß es bei Aufzeichnungen des Schriftbildes zu Ausfällungen und Blockierung der Druckerdüsen kommen kann. Es wurde nun gefunden, daß die Wasserlöslichkeit verbessert wird, wenn in dem polymeren Gerüst Carbonamidgruppen eingebaut sind.

Aus EP-A 0 317 859 sind ebenfalls polymere Farbstoffe bekannt, die kovalent gebundene Polyethylenimingruppen enthalten und zum Färben oder Bedrucken von Fasermaterialien oder zur Herstellung von Tinten für das Ink-jet Verfahren eingesetzt werden können.

Die neuen polymeren Farbstoffe sind erhältlich durch Umsetzung von
A) Polyamidaminen mit einem als Gewichtsmittel bestimmten mittleren Molekulargewicht von 260 bis 10.000, die ihrerseits erhältlich sind durch Umsetzung von aliphatischen Polyaminen (I), die mindestens zwei primäre Aminogruppen und mindestens eine sekundäre Aminogruppe enthalten, gegebenenfalls im Gemisch mit Diaminen (II), mit Dicarbonsäuren (α), mit der Maßgabe, daß das molare Verhältnis der Summe der in (I) und gegebenenfalls (II) enthaltenen primären und sekundären Aminogruppen zu den Carboxylgruppen in (α) > 1, vorzugsweise 1,05 bis 3 ist,
   mit
B) einem Farbstoff, der pro Molekül mindestens eine gegenüber primären und sekundären Aminogruppen reaktive Gruppe enthält,
wobei das molare Verhältnis der Summe der in A) enthaltenen primären und sekundären Aminogruppen zu B) 1 bis 15, vorzugsweise 1 bis 10, beträgt.

Zur Herstellung der Polyamidamine A) wird vorzugsweise mindestens ein Polyamin der Formel (I) 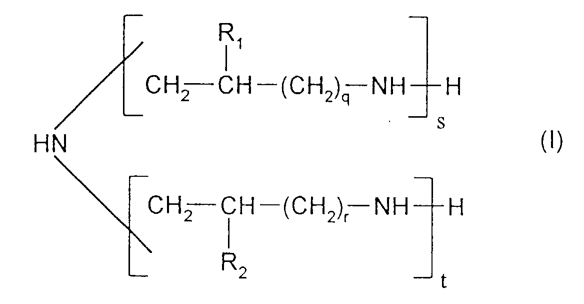 worin
- R₁, R₂: unabhängig voneinander für Wasserstoff, Methyl oder Ethyl,
- q, r: unabhängig voneinander für 0, 1, 2, 3 oder 4 und
- s, t: unabhängig voneinander für 1, 2, 3, 4, 5 oder 6 stehen,
oder ein Gemisch aus mindestens einem Polyamin der Formel (I) und mindestens einem Diamin der Formel (II)

H₂N―R₃―NH₂ (II)

worin
- R₃: für C₂-C₉-Alkylen oder einen zweiwertigen Rest der Formel 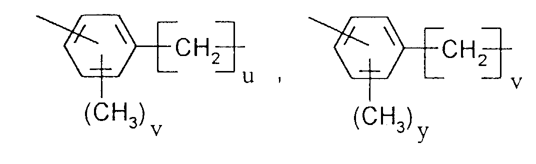 oder 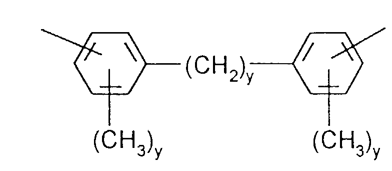 steht,
worin
- u: für 1 oder 2
- v: für 0 oder 1 und
- y: für 0, 1, 2 oder 3 stehen
mit mindestens einer Dicarbonsäure (α) aus der Reihe der aliphatischen gesättigten C₂-C₁₂-Dicarbonsäuren, olefinisch ungesättigten C₄-C₁₂-Dicarbonsäuren oder aromatischen Dicarbonsäuren oder deren funktionellen Derivaten und gegebenenfalls ω-C₃-C₈-Aminocarbonsäuren oder deren Lactamen kondensiert.

Das Molverhältnis der Polyamine der Formel (I) zu den Diaminen der Formel (II) und das der oben erwähnten Dicarbonsäuren bzw. Dicarbonsäure-Derivaten zu den ω-C₃-C₈-Aminocarbonsäuren oder deren Lactamen kann in weiten Grenzen schwanken und ist in beiden Fällen bevorzugt größer als 1.

Vorzugsweise handelt es sich bei den Polyamidaminen A) um solche mit einem Basenäquivalentgewicht von 140 bis 800, die mit Wasser in praktisch jedem Verhältnis mischbar sind.

Beispiele für Polyamine der Formel (I) sind:
Diethylentriamin, Triethylentetramin, Tetraethylenpentamin, Pentaethylenhexamin, Hexaethylenheptamin, Heptaethylenoctamin, Bis(3-aminopropyl)amin, Bis(2-aminopropyl)amin, 1,3-Bis(2-aminoethylamino)propan, 1,2-Bis(2-aminopropylamino)-propan, 1,3-Bis(3-aminopropylamino)propan, Bis(hexamethylen)triamin, 1,6-Bis(2-aminoethylamino)hexan, 1,6-Bis(3-aminopropylamino)hexan, N-3-Aminopropyl-tetramethylendiamin oder N,N'-Bis(3-aminopropyl)tetramethylendiamin. Von diesen sind Diethylentriamin, Triethylentetramin, Bis(3-aminopropyl)amin und Bis(2-aminopropyl)amin bevorzugt.

Beispiele für Diamine der Formel (II) sind:
Ethylendiamin, 1,2-Diaminopropan, 1,3-Diaminopropan, 1,3-Diaminobutan, 1,4-Diaminobutan, 1,6-Diaminohexan, 3-Methyl-1,5-diaminopentan, Isomerengemisch 2,2,4-Trimethyl- und 2,4,4-Trimethyl-1,6-diaminohexan, 1,4-Diaminocyclohexan, 1-Methyl-2,4- und -2,6-diaminocyclohexan, 4,4'-Diamino-dicyclohexylmethan, 1,3-Bis(4-aminocyclohexyl)propan, 4-Aminobenzylamin, 4-Aminophenethylamin oder 1,3-Bis(aminomethyl)benzol. Von diesen sind wiederum Ethylendiamin und 1,2Diaminopropan bevorzugt.

Geeignete Dicarbonsäuren (α) sind beispielsweise:
Oxalsäure, Malonsäure, Maleinsäure, Fumarsäure, Itaconsäure, Bernsteinsäure, Glutarsäure, Adipinsäure, Azelainsäure, Sebacinsäure, 1,12-Dodecandisäure, Terephthalsäure oder Isophthalsäure. Als funktionelle Derivate kommen deren Anhydride, Dialkylester oder Halbester in Frage. Bevorzugte Dicarbonsäuren sind Glutarsäure und Adipinsäure.

Als Aminocarbonsäuren und ihre Lactame seien genannt:
6-Aminocapronsäure, 8-Aminocaprylsäure, 8-Capryllactam und vor allem 6-Caprolactam.

Die zur Herstellung der erfindungsgemäßen Farbstoffe verwendbaren Polyamidamine A) sind an sich bekannt, beispielsweise aus der DE-A 1 771 043, DE-A 3 808 741 oder DE-A 3 934 713.

Die Herstellung der Polyamidamine A) kann in ebenfalls bekannter Weise erfolgen, beispielsweise durch Erhitzen der Amin- und Carbonsäure-Komponenten (I), gegebenenfalls mit (II) und (α) unter Normaldruck bei Temperaturen von 110 bis 250°C, vorzugsweise 140 bis 210°C. Hierbei erhitzt man das Gemisch zunächst auf 100°C und läßt dann bei gleichzeitiger Entfernung des bei der Reaktion entstehenden Wassers die Temperatur im Verlauf mehrerer Stunden auf 210°C ansteigen. Die gebildete zähe Reaktionsmasse kann durch Verdünnen mit Wasser auf eine für die Handhabung günstige Viskosität eingestellt werden.

Die Farbstoffe B) leiten sich von bekannten Farbstoffklassen ab, beispielsweise der Klasse der Phthalocyanin-, Nitroaryl-, Triphenylmethan-, Oxazin-, Triphendioxazin-, Phenazin-, Stilben-, Thiazin- und Xanthenfarbstoffe, vor allem aber der der Anthrachinon-, Monoazo-, Disazo- und Polyazofarbstoffe, sowie weiterhin der Metallkomplexfarbstoffe, wie 1:1-Nickel-, 1:1-Kupfer-, 1:1-Kobalt- oder 1:1-Chromkomplexe oder die symmetrischen oder unsymmetrischen 1:2-Kobalt- oder 1:2-Chromkomplexe von Azo- oder Azomethinfarbstoffen mit einer metallkomplexbildenden o,o'-Dihydroxy-, o-Hydroxy-o'-amino- oder o-Carboxy-o'-hydroxy-Azo- oder -Azomethinstruktur.

Vorzugsweise leiten sich die Farbstoffe B) von wasserlöslichen Farbstoffen der obengenannten Klassen ab, die als wasserlöslichmachende Gruppen unabhängig voneinander eine oder mehrere Sulfonamid-, am Stickstoff ein- und zweimal alkylsubstituierte Sulfonamid-, Alkylsulfonyl-, Carboxyl-, Carboxylat- oder Sulfonatgruppen enthalten. Bevorzugte Alkylgruppen sind Methyl, Ethyl und Hydroxyethyl. Als Gegenionen der anionischen Gruppen kommen Alkaliionen, insbesondere Lithium-, Natrium- oder Kaliumionen, Ammoniumionen oder die Kationen von organischen Aminen, insbesondere mono-, di-, tri- oder tetra-niedrigalkylsubstituierte Ammoniumionen in Betracht.

Die Farbstoffe B) weisen 1 oder 2, vorzugsweise eine, gegenüber primären und sekundären Aminogruppen reaktive Gruppen auf.

Bei den gegenüber primären und sekundären Aminen reaktiven Gruppen handelt es sich bevorzugt um aliphatische, aromatische oder heterocyclische Reste, die ein oder mehrere elektrophile Zentren aufweisen, an die gegebenenfalls eine oder mehrere Abgangsgruppen gebunden sind, und die durch Reaktion des elektrophilen Zentrums mit den primären und sekundären Aminogruppen des Polyamidamins A) eine kovalente Bindung ausbilden können.

Die gegenüber primären und sekundären Aminogruppen reaktiven Gruppen können direkt oder über ein Brückenglied an das Farbstoffmolekül gebunden sein; vorzugsweise sind sie direkt oder über eine gegebenenfalls monoalkylierte Aminogruppe, wie beispielsweise -NH-, -N(CH₃)- oder -N(C₂H₅)- oder über einen aliphatischen Rest, wie Methylen, Ethylen, Propylen oder C₂-C₈-Alkylen, welches durch eine oder zwei Oxigruppen unterbrochen sein kann, oder über ein eine Aminogruppe enthaltendes Brückenglied, wie beispielsweise eine Phenylaminogruppe, an das Farbstoffmolekül gebunden.

Vorzugsweise handelt es sich bei den gegenüber primären und sekundären Aminen reaktiven Gruppen um solche, die in der Farbstoffchemie allgemein als "faserreaktive Reste" bekannt sind. Solche faserreaktiven Reste sind beispielsweise durch folgende Formeln wiedergegeben:
-SO₂-A, -CO-A, -SO₂-CH=CH₂,
-SO₂-CH₂CH₂-A, -CO-CH₂CH₂-A, -CONH-CH₂-A,
-SO₂NH-CH₂CH₂-A, -NHCO-CH₂CH₂-A, 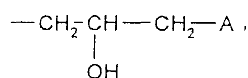 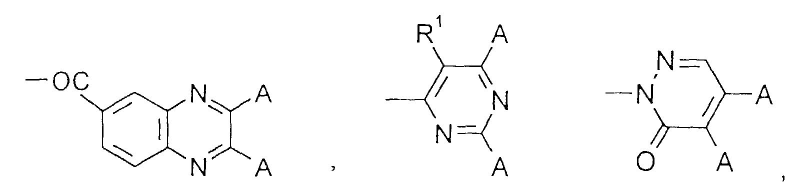 mit R¹ = H, Cl, CH₃, CN 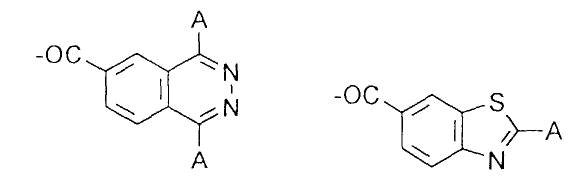 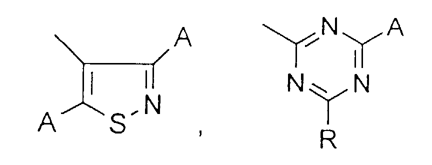 mit R = NH₂, 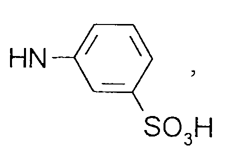 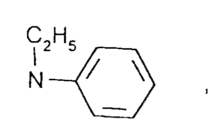 OCH₃ oder OCH₂CH₂OCH₃,
und bevorzugt 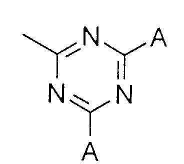 mit A = Cl, F, OSO₃H, N(CH₃)₃Cl, SO₂CH₃, OPO₃H und SO₂C₂H₅.

Im einzelnen sind beispielsweise folgende Reaktivreste zu nennen:
2,4-Difluortriazinyl-6-, 2,4-Dichlortriazinyl-6-, Mono-halogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes C₁-C₄-Alkyl, Aralkyl vorzugsweise gegebenenfalls substituiertes Phenyl-C₁-C₄-alkyl und Aryl, vorzugsweise gegebenenfalls substituiertes Phenyl oder Naphthyl bedeutet und wobei bevorzugte Substituenten für Alkyl, Halogen, Hydroxy, Cyan, Vinylsulfonyl, substituiertes Alkylsulfonyl, Dialkylamino, Morpholino, C₁-C₄-Alkoxy, Vinylsulfonyl-C₂-C₄-alkoxy, substituierte Alkylsulfonyl-C₂-C₄-alkoxy, Carboxy, Sulfo oder Sulfato sind und für Phenyl und Naphthyl, Sulfo, C₁-C₄-Alkyl, C₁-C₄-Alkoxy, Carboxy, Halogen, Acylamino, Vinylsulfonyl, substituiertes Alkylsulfonyl, Hydroxy, Amino.

Im einzelnen seien folgende Reste genannt:
2-Amino-4-fluor-triazinyl-6, 2-Methylamino-4-fluor-triazinyl-6, 2-Ethylamino-4-fluor-triazinyl-6, 2-Isopropylamino-4-fluor-triazinyl-6, 2-Dimethylamino-4-fluor-triazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluortriazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluortriazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluortriazinyl-6, 2-(o-, m-, p-Carboxyphenyl)-amino-4-fluor-triazinyl-6, 2-(2'-,4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- bzw. N-Ethyl-N-(2,4-dichlortriazinyl-6)-aminoacetyl-, 2-Methoxy-4-fluortriazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxyphenoxy)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluor-triazinyl-6, 2-(2',4'-Dinitrophenyl)-mercapto-4-fluor-triazinyl-6, 2-Methyl-4-fluor-triazinyl-6, 2-Phenyl4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäuren oder Hydrogensulfit erhältlichen Reste.

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-thiomethyl- oder -5-carboxymethyl- oder -5-carboxy- oder -5-cyano- oder -5-vinyl- oder 5-sulfo- oder -5-mono-, -di- oder -trichlormethyl- oder -5-carbalkoxypyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2-oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl- oder -6-carbonyl-, 2,4-Dichlorchinoxalin-7- oder -6-sulfonyl- oder - carbonyl-, 2- oder 3- oder 4-(4',5'-Dichlorpyridazon-6'-yl-1')-phenylsulfonyl- oder - carbonyl-, β-(4',5'-Dichlorpyridazon-6'-yl-1')-ethyl-carbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-; 2-Fluor-5,6-dichlor-4-pyrimidinyl-, 2,6-Difluor-5-methyl-4-pyrimidinyl-, 2,6-Difluor-5-thiomethyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5 -nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbmethoxy4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-fluor-2-methyl-4-pyrimidinyl-, 5,6-Difluor-2-trifluormethyl-4-pyrimidinyl-, 5-Chlor-6-fluor-2-dichlorfluormethyl-4-pyrimidinyl-, 2-Fluor-5-chlorpyrimidin4-yl, 2-Methyl-4-fluor-5-methylsulfonylpyrimidinyl-6, 2,6-Difluor-5-methylsulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste wie 2,4-Bis-(phenylsulfonyl)-triazinyl-6-, 2-(3'-Carboxyphenyl)-sulfonyl-4-ch1ortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2,6-Bis-methylsulfonyl-5-chlor-pyrimidiny)-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methylpyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Phenylsulfonyl-5-chlor-6-methyl-pyrimidinyl-4-, 2,6-Bis-methylsulfonyl-pyrimidinyl-4-, 2-Ethylsulfonyl-5-chlor-6-methylpyrimidinyl-4, 2-Methylsulfonyl-6-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carboxymethoxy-pyrimidinyl-4, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-β-Sulfoethyl-sulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl, 2,4-Bis-(methylsulfonyl)-pyrimidin-5-sulfonyl- oder -carbonyl-; 2-Chlorbenzthiazol-5-oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonyl-benzthiazol-5- oder -6-sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5-oder -6-carbonyl- oder -sulfonyl-Derivate, 2-Chlorbenzoxazol-5-oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl, N-Oxid des 4-Chlor- oder 4-Nitrochinolin-5-carbonyl.

Bei den Farbstoffen B) handelt es sich also bevorzugt um sogenannte faserreaktive Farbstoffe der oben erwähnten Farbstoffklassen, die einen oder zwei faserreaktive Reste der genannten Art enthalten, deren faserreaktive Reste mit den primären und sekundären Aminogruppen der Polyamidamine A) unter Bildung kovalenter chemischer Bindungen zu reagieren vermögen.

Derartige faserreaktive Farbstoffe sind in der Literatur zahlreich beschrieben und stehen in großer Zahl als Handelsprodukte zur Verfügung. Eine Aufstellung von faserreaktiven Handelsprodukten befindet sich beispielsweise in "Colour Index", 3. Ed. (4. Revision, 1992), Vol. 9, S. 5151-5168.

Für die Herstellung der erfindungsgemäßen polymeren Farbstoffe sind solche faserreaktiven Farbstoffe bevorzugt, die nur eine faserreaktive Gruppe enthalten und durch Additions- oder Substitutionsreaktionen mit den primären und sekundären Amingruppen des Polyamidamins unter neutralen bis schwach alkalischen Bedingungen bei Temperaturen von 20 bis 80°C eine chemische Bindung eingehen.

Bei der Herstellung der erfindungsgemäßen Farbstoffe ist es bevorzugt, in einer vorgelagerten Synthesestufe zunächst den Farbstoff B) aufzubauen durch Umsetzung eines Farbstoffs B1), der frei ist von gegenüber primären und sekundären Aminogruppen reaktiven Gruppen, vorzugsweise einer der obengenannten Farbstoffklassen entspricht und der ein oder zwei, bevorzugt ein nucleophiles Zentrum aufweist, mit einer di- oder trifunktionellen aliphatischen, aromatischen oder heterocyclischen Verbindung, die zwei oder drei elektrophile Zentren aufweist, an welche gegebenenfalls zwei oder drei Abgangsgruppen gebunden sind, wobei im Falle der Reaktion mit einer trifunktionellen Verbindung das molare Verhältnis dieser Verbindung zum Farbstoff B1) vorzugsweise 1:2 beträgt.

In einer Herstellungsvariante ist es auch möglich, zunächst das Polyamidamin A) mit einer di- oder trifunktionellen aliphatischen, aromatischen oder heterocyclischen Verbindung, die zwei oder drei elektrophile, gegenüber primären und sekundären Aminogruppen reaktive Zentren aufweist, an die jeweils eine Abgangsgruppe gebunden ist, umzusetzen, und anschließend das derart modifizierte Polyamidamin mit einem Farbstoff B1), der frei ist von gegenüber primären und sekundären Aminogruppen reaktiven Gruppen und der vorzugsweise den oben genannten Farbstoffklassen angehört, der ein oder mehrere nucleophile Zentren aufweist, umzusetzen.

Eine weitere Variante zur Herstellung der erfindungsgemäßen Farbstoffe besteht darin, einen reaktiven Farbstoffvorläufer mit dem Polyamidamin A) umzusetzen und nach der Umsetzung durch geeignete Kondensation- oder Diazotierungs- und Kupplungsreaktionen am Polymeren den eigentlichen Farbkörper aufzubauen.

Die Umsetzung eines reaktiven Vorläufers mit einem aminhaltigen Polymer und der Aufbau von Farbstoffen am polymeren Gerüst sind an sich bekannt und beispielsweise in US-A 3 920 855, US-A 4 018 826 und US-A 4 375 357 beschrieben.

Zur Veranschaulichung einer speziellen Ausführungsform der erfindungsgemäßen polymeren Farbstoffe soll folgende formelmäßige Darstellung dienen: 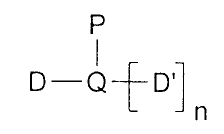 wobei
- P: für den Rest eines Polyamidamins A) steht und
- D-Q-[D']ₙ: für den Rest eines Farbstoffes B) steht,
wobei
D und D' gleich oder verschieden sind und jeweils für einen chromophoren Rest stehen,
Q für ein Brückenglied steht, das sich im Falle von n = 0 von einer di- und im Falle von n = 1 von einer trifunktionellen, gegenüber primären und sekundären Aminen reaktiven Verbindung ableitet, und
n für 0 oder 1 steht.

Nach beendeter Synthese der erfindungsgemäßen polymeren Farbstoffe erhält man in der Regel eine Lösung, die nach Reinigung durch eine Druckpermeation direkt zu einer Flüssigformierung eingestellt werden kann. In vielen Fällen kann man durch Einengen der Lösung oder gegebenenfalls der Suspension ein meist amorphes Pulver gewinnen, das auf dem üblichen Weg zu Pulver- oder wiederum Flüssigformierungen aufgearbeitet werden kann. Falls eine Druckpermeation durchgeführt wird, so erfolgt sie an semipermeablen Membranen entweder als Reversosmose, Ultra- oder Nanofiltration oder durch Kombination dieser Methoden. Bevorzugte Methode ist die Ultrafiltration unter Verwendung von Membranen, die für Salze und Verbindungen mit einem Molekulargewicht von unter ca. 20 000 Dalton durchlässig sind. Auf diese Weise können niedermolekulare Anteile des polymeren Farbstoffes abgetrennt werden, insbesondere auch monomere Färbstoffhydrolysate, die z.B. durch Hydrolyse von faserreaktiven Farbstoffen gebildet werden und bei den obengenannten Umsetzungen leicht als Nebenprodukte entstehen.

Die erfindungsgemäßen Farbstoffe färben sowohl in Form von festen als auch von flüssigen Präparationen cellulose- und amidgruppenhaltige Materialien, insbesondere Papier, Baumwolle und Leder und ergeben Färbungen mit guter Naß- und Lichtechtheit. Sie eignen sich besonders gut zur Herstellung von Aufzeichnungsflüssigkeiten für Tintenstrahl-Druckverfahren (Ink-Jet-Verfahren).

Bei der Herstellung von Aufzeichnungsflüssigkeiten ist keine Zwischenisolierung der erfindungsgemäßen Farbstoffe notwendig. Die bei ihrer Synthese anfallende Lösung oder gegebenenfalls anfallende Suspension kann direkt unter Anwendung von Membrantrennverfahren entsalzt und von unerwünschten niedermolekularen Nebenprodukten befreit und anschließend gegebenenfalls durch Zusatz von Wasser, organischen oder anorganischen Basen, wasserlöslicher organischer Lösungsmittel und weiterer üblicher Zusätze in die für Tintenstrahl-Druckverfahren gewünschte Formierung überführt werden.

Als anorganische Basen kommen Lithiumhydroxid, Natriumhydroxid, Kaliumhydroxid, Lithiumcarbonat, Natriumcarbonat, Kaliumcarbonat, als organische Basen Ethanolamin, Diethanolamin, Triethanolamin, N-Methylethanolamin, N,N-Dimethylethanolamin, N-Methyldiethanolamin, 1-Amino-2-propanol, 2-Amino-1-propanol, Diisopropylamin, N-2-Hydroxyethyldiisopropylamin oder Tris-N,N,N-[2-(2-hydroxyethoxy)-ethyl]amin in Frage.

Geeignete organische Lösungsmittel sind mehrwertige Alkohole und deren Ether und Ester, Carbonsäureamide, Harnstoffe, cyclische Amide und Harnstoffe, Sulfone und Sulfoxide; besonders geeignet sind beispielsweise Ethylenglykol und dessen Monomethyl-, -ethyl- und -propylether, 1,2-Propylenglykol, 1-Methoxy-2-propanol, 2-Methoxy- 1-propanol, 1 -Ethoxy-2-propanol, 1-Ethoxy-1-propanol, Diethylenglykol, Diethylenglykolmonomethyl-, -ethylether, Triethylenglykol, 1,5-Pentandiol, Essigsäure-2-hydroxyethylester, Essigsäure-2-(2-hydroxyethoxy)-ethylester, Glycerin, Pyrrolidon, N-Methylpyrrolidon, 6-Caprolactam, N-Methyl-6-caprolactam, Tetramethylharnstoff, 1,3-Dimethyl-2-imidazolidon, N,N'-Dimethylpropylenharnstoff, Dimethylsulfoxid, Dimethylsulfon, Sulfolan und Polyethylenglykole mit einem Molekulargewicht bis 500 Dalton.

Als weitere in Drucktinten übliche Zusätze kommen solche ionischen oder nichtionischen Stoffe in Frage, mit denen die Viskosität und/oder Oberflächenspannung in die für die Anwendung erforderlichen Bereiche eingestellt werden kann.

Die erfindungsgemäßen Aufzeichnungsflüssigkeiten setzen sich zusammen aus:
- 0,5 bis 20 Gew.-% eines oder mehrerer erfindungsgemäßer polymerer Farbstoffe,
- 50 bis 99,5 Gew.-% Wasser,
- 0 bis 30 Gew.-% eines oder mehrerer organischer Lösungsmittel und
- 0 bis 30 Gew.-% Viskosität und/oder Oberflächenspannung beeinflussende Zusätze,
wobei sich die Summe der genannten Inhaltsstoffe auf 100 % ergänzt.

Die erfindungsgemäßen Aufzeichnungsflüssigkeiten zeichnen sich dadurch aus, daß sich auch bei längerem Aufbewahren keine Ausfällungen ablagern und daß sich auch bei geringen Verdunstungen die feinen Düsen von Aufzeichnungsköpfen nicht verstopfen. Sie fixieren rasch auf den verschiedenen Aufzeichnungsmedien, verlaufen nicht und bilden scharfe Ränder ohne Ausfransungen. Man erhält Bilder in hoher Auflösung mit ausgezeichneter Wasserfestigkeit, Lichtechtheit und Abriebbeständigkeit.

### A. Herstellung der Polyamidamin-Harze

### Beispiel 1

In der Vorlage aus 216,3 g Diethylentriamin trägt man 292 g Adipinsäure ein und erhitzt das Gemisch eine Stunde unter Rückfluß. Danach ersetzt man den Rückflußkühler gegen eine Destillationsbrücke und erhitzt unter gleichmäßigem Abdestillieren des Reaktionswassers etwa 3 Stunden weiter, bis die Innentemperatur auf 197°C angestiegen ist. Die Polyamid-Schmelze wird nun auf 165°C abgekühlt, vorsichtig mit 436 g Wasser versetzt und eine Stunde bei 90 bis 95°C nachgerührt. Nach Abkühlen auf Raumtemperatur erhält man eine klare, gelbe Lösung mit einem Feststoffanteil von 49,5 Gew.-%, einer Viskosität von ca. 390 mPa.s und einem Basenäquivalentgewicht von 383. Das mittlere Molekulargewicht beträgt 4363.

### Beispiel 2

Behandelt man ein Gemisch von 292 g Adipinsäure und 226,6 g Diethylentriamin wie unter Beispiel 1 beschrieben und setzt der Schmelze nach Abkühlen auf 165°C 446 ml statt 436 ml Wasser zu, so erhält man ebenfalls eine klare, schwach gelbe Polyamidaminlösung. Der Feststoffgehalt und das mittlere Molekulargewicht betragen hier 49,4 Gew.-% bzw. 2233. Als Basenäquivalentgewicht wird ein Wert von 351 und für die Viskosität ein Wert von 381 mPas gefunden.

### B. Herstellung von polymeren Farbstoffen

### Beispiel 3

223 g einer Paste des Farbstoffes der Formel 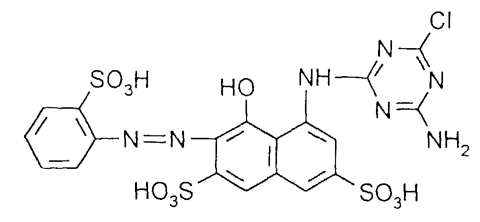 mit einem Farbstoffgehalt von 41 % werden in 500 ml Wasser angerührt. In die nach kurzer Zeit entstehende Lösung werden 111 g Polyamidamin-Lösung des Beispiels 1 (entsprechend 2 Mol nucleophiles Amin pro Mol Farbstoff), eingetragen. Es stellt sich zunächst ein pH von 10,5 ein, der aber beim Erwärmen der Lösung auf 80°C abfällt und durch Zutropfen von 2 N Natronlauge bei 8,5 gehalten wird. Nach 30 Minuten bei 80°C läßt sich im Dünnschichtchromatogramm oder durch HPLC kein Ausgangsfarbstoff mehr nachweisen. Die dünnflüssige Lösung des gebildeten Kondensationsproduktes, welches ein mittleres Molekulargewicht von 11 508 besitzt, wird tropfenweise und anfangs sehr langsam auf 600 ml einer 1N Salzsäure ausgetragen. Der zunächst etwas klebrig ausfallende Niederschlag wird allmählich kristallin. Er wird durch Filtration abgetrennt, in einem Liter Wasser angerührt und mit Natronlauge bei pH 8,5 wieder gelöst. Die Lösung wird mit 8 g eines handelsüblichen Klärhilfsmittel auf Kieselgurbasis (z.B. Dicalite®) versetzt und nach einstündigem Rühren abfiltriert. Man erhält eine stabile ca. 10 %ige Lösung eines polymeren Farbstoffes mit einem λmax-Wert von 521 nm, dessen Farbkörper dem Rest der Formel 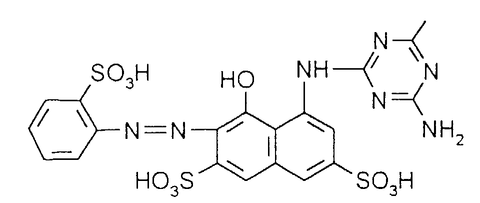 entspricht.

Vermischt man 20 g dieser Lösung mit 70 g Wasser und 10 g Diethylenglykol, so erhält man eine wertvolle Aufzeichnungsflüssigkeit, mit der sich auf den üblichen Schreibpapieren naßfeste ink jet-Drucke in lichtechten Magenta-Tönen erzielen lassen.

### Beispiel 4

564 g einer Paste des Fabstoffes der Formel 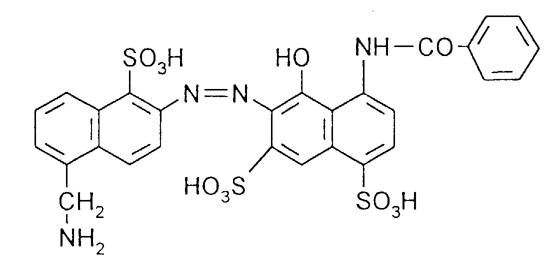 mit einem Farbstoffgehalt von 35,3 % werden in 1 600 ml Wasser suspendiert und durch Zutropfen von 30 ml 10 N Natronlauge bei pH 11,7 gelöst. Die Lösung wid unter kräftigem Rühren innerhalb einer Stunde auf eine Vorlage von 26,74 g Cyanurchlorid in 500 ml Wasser und 800 g Eis ausgetragen. Man bringt dann den pH mit 2 N Natronlauge auf 8,5, läßt die Temperatur unter Konstanthalten des pH-Wertes auf Raumtemperatur ansteigen und rührt einige Stunden weiter, bis zum Halten des pH keine Natronlauge mehr benötigt wird.

Nach beendeter Kondensation fügt man 389 g des Polyamidamins des Beispiels 1 (entsprechend 7 Mol nucleophiles Amin pro Mol Cyanurchlorid) zu und erwärmt das Ganze weiterhin bei pH 8,5 eine Stunde lang bei 80°C. Man läßt auf Raumtemperatur abkühlen, setzt 30 g eines Klärhilfsmittels zu, rührt eine Stunde und erhält nach Filtrieren 3,9 Liter einer Farbstofflösung, die etwa 400 g erfindungsgemäßen magentafarbenen Farbstoff mit einem λmax-Wert von 518 nm enthält, dessen Farbkörper der Formel 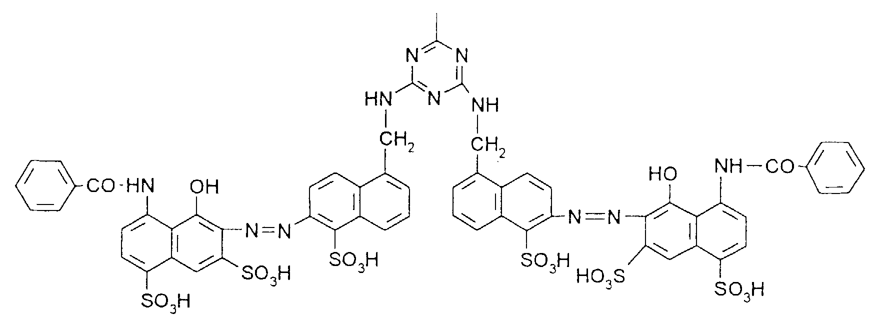 entspricht. Das mittlere Molekulargewicht beträgt hier 9117.

Die ca. 0,8 Gew.-% NaCl enthaltende Farbstofflösung wird zur weiteren Reinigung auf einer Ultrafiltrations-Laboranlage an einer semipermeablen Membran mit einer Trenngrenze von 3 000 Dalton behandelt. Dabei wird zunächst auf ein Volumen von 2 000 ml aufkonzentriert und dieser Vorgang nach Auffüllen mit 2 Liter Wasser wiederholt. Der NaCl-Gehalt beträgt nun bei doppelter Farbstoffkonzentration nur noch 0,39 %.

Aus der salzärmeren stabilen Farbstofflösung gewinnt man durch Verdünnung mit 3,5 Teilen Wasser und 0,5 Teil Diethylenglykol ebenfalls eine magentafarbene Tinte mit guten anwendungstechnischen Eigenschaften.

Verwendet man anstelle von 389 g des Polyamidamins des Beispiels 1 333 g oder 444 g dieses Polymers und verfährt sonst, wie in diesem Beispiel beschrieben, so erhält man magentafarbene Tinten mit ähnlich guten Eigenschaften.

### Beispiel 5

Verfährt man wie in Beispiel 4, verwendet aber statt 389 g Polyamidamin des Beispiels 1 nur 249 g Polyamidamin des Beispiels 2, so erhält man etwa 3,8 Liter einer ebenfalls magentafarbenen Farbstofflösung. In diesem Fall beträgt das molare Verhältnis von Cyanurchlorid zu einem nucleophilen Polyamidamin-Stickstoff 1:5. Die Lösung enthält 334 g des erfindungsgemäßen Farbstoffes mit einem λₘₐₓ-Wert von 518 nm. Der Farbkörper ohne Polyamidamin-Rest entspricht dem des Beispiels 4.

### Beispiel 6

569 g Paste des Farbstoffes der Formel 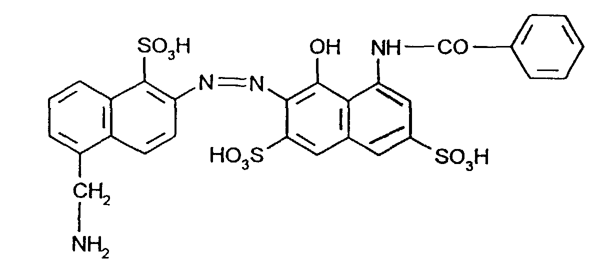 mit einem Farbstoffgehalt von 35,0 % werden wie in Beispiel 4 beschrieben mit 26,74 g Cyanurchlorid (0,1449 Mol) und 249 g Polyamidamin des Beispiels 2 (0,7246 Mol nucleophiles Amin = 5-fach molare Menge von Cyanurchlorid) umgesetzt. Man gewinnt wiederum ca. 3,8 Liter einer magentafarbenen Farbstofflösung, in der 334 g des erfindungsgemäßen Farbstoffes mit einem λₘₐₓ-Wert von 522 nm gelöst sind. Der Farbkörper des Polyamidamin-haltigen Farbstoffes entspricht der Formel

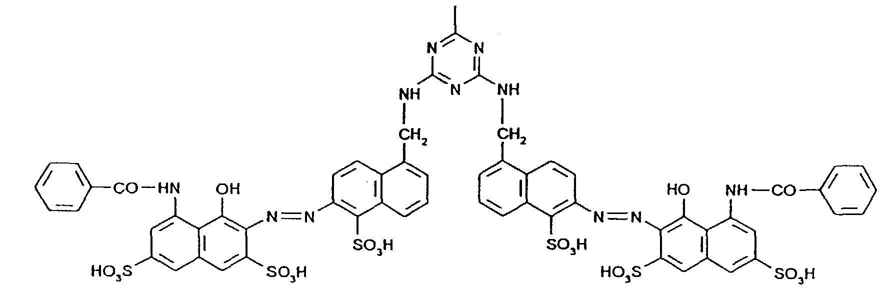

### Beispiel 7

1285 g einer wäßrigen Suspension des Farbstoffes der Formel 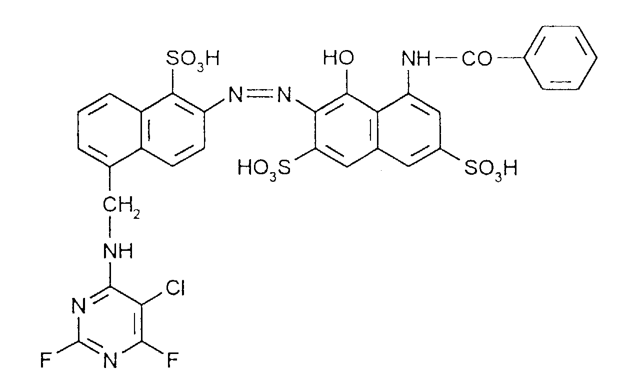 mit einem Farbstoffgehalt von 13,0 % (0,2 Mol) werden mit 700 ml Wasser verdünnt und mit 343 g Polyamidamin des Beispiels 2 (1 Mol nucleophiles Amin) versetzt. Nach Abkühlen auf Raumtemperatur wird der pH-Wert der Reaktionslösung durch Zusatz von wenigen ml Essigsäure von 9,3 auf 9,0 zurückgestellt. Man setzt 30 g eines Klärhilfsmittels zu, rührt eine Stunde, filtriert und spült die erhaltenen 2,1 Liter Filtrat in einer Ultrafiltrationsanlage an einer semipermeablen Membran mit einer Trenngrenze von 15 000 Dalton 5 mal mit jeweils 2,1 Liter entmineralisiertem Wasser.

Die nun nahezu elektrolytfreie Lösung stellt eine magentafarbene Tinte mit guten anwendungstechnischen Eigenschaften dar. Sie enthält 318 g des erfindungsgemäßen Farbstoffes, dessen Polyaminamid-freier Farbkörper der Formel 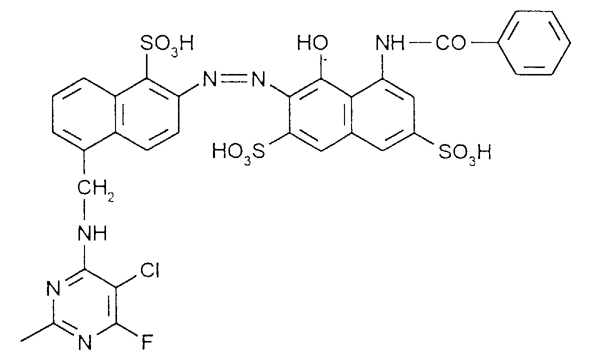 entspricht. Der λₘₐₓ-Wert beträgt 543 nm.

### Beispiel 8

282 g Farbbase aus Beispiel 4 werden in 800 ml Wasser suspendiert und mit Lithiumhydroxid bei pH 12 gelöst. Die Lösung wird unter kräftigem Rühren auf eine Vorlage von 27 g Cyanurchlorid in 500 ml Wasser und 200 g Eis ausgetragen. Unter Konstanthalten des pH-Wertes bei 7 mit 5 % Lithiumhydroxidlösung und Erwärmen auf Raumtemperatur wird einige Stunden gerührt, bis keine Lithiumhydroxidlösung mehr verbraucht wird.

Nach beendeter Kondensation fügt man 158 g des Polyamidamins des Beispiels 1 zu (das molare Verhältnis von Cyanurchlorid zu einem nucleophilen Polyamidamin-Stickstoff beträgt 1:2), erwärmt das Gemisch eine Stunde auf 80°C und hält den pH bei 8,5. Man läßt auf Raumtemperatur abkühlen, filtriert und erhält 2 l einer Farbstofflösung, die etwa 200 g erfindungsgemäßen magentafarbenen Farbstoff mit dem Farbkörper der Formel 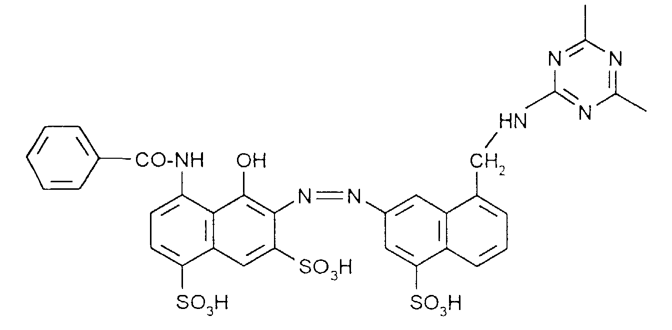 und einem λₘₐₓ-Wert von 518 nm enthält.

### Beispiel 9

95,4 g Farbstoff der Formel 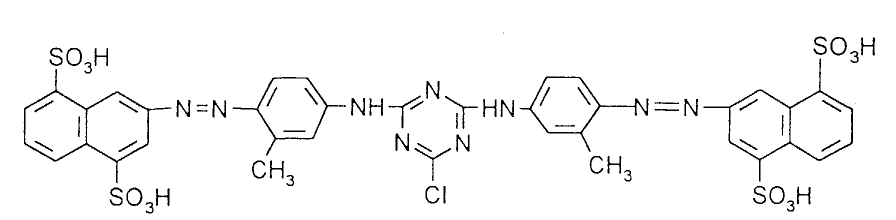 werden in 1 800 ml Wasser bei 50°C und pH 8,5 mit 171,5 g Polyamidamin des Beispiels 2 (entsprechend 5 Mol nucleophiles Amin pro Mol Farbstoff) umgesetzt. Nach der Druckpermeation an einer semipermeablen Membran erhält man eine salzarme 13,2 gew.-%ige Lösung eines erfindungsgemäßen Farbstoffes mit einem λmax-Wert von 384 nm, dessen Farbkörper der Formel 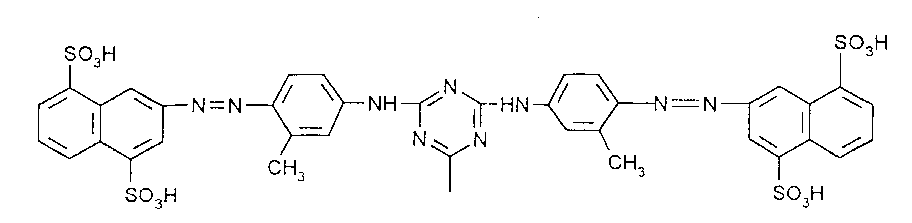 entspricht.

15 ml dieser Farbstofflösung werden mit 10 ml Diethylenglykol und 75 ml Wasser zu einer gelben Aufzeichnungsflüssigkeit eingestellt. Diese verstopft bei Verwendung von handelsüblichen ink jet-Druckern keine Düsen und liefert licht- und naßechte Schriftbilder in gelber Farbe.

### Beispiel 10

72,4 g Farbstoff der Formel 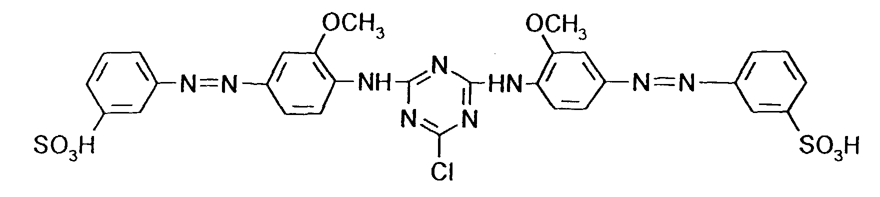 werden ähnlich wie unter Beispiel 4 beschrieben mit 115 g Polyamidamin des Beispiels 1 (entsprechend 3,04 Mol nucleophiles Amin pro Mol Farbstoff) zum polymeren Farbstoff mit einem λₘₐₓ-Wert von 400 nm umgesetzt, dessen Farbkörper der Formel 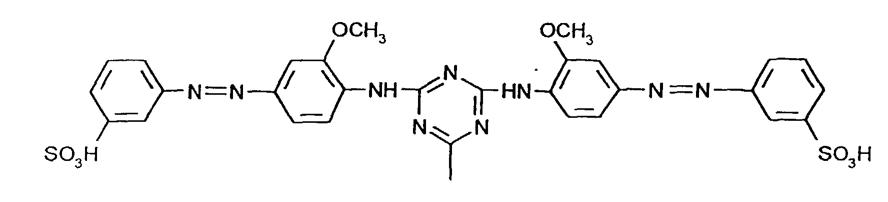 entspricht. Auch hier lassen sich anschließend für den ink jet-Druck geeignete gelbe Flüssigformulierungen einstellen.

### Beispiel 11

300 g Farbstoff (90 %) der Formel 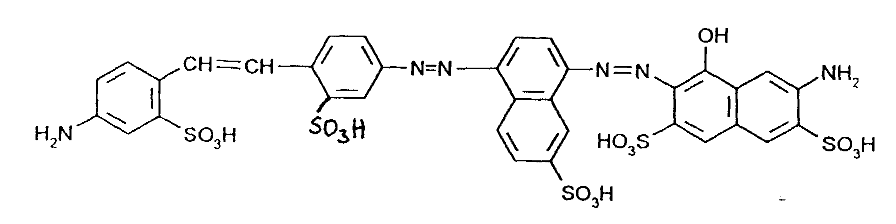 werden in 2 l Wasser suspendiert und mit 29,5 g Cyanurchlorid versetzt. Der pH-Wert wird mit 5 % Lithiumhydroxidlösung bei 6,5 gehalten, bis kein Lithiumhydroxid mehr verbraucht wird. Nach beendeter Kondensation werden 364 g Polyamidamin des Beispiels 1 zugesetzt. Das molare Verhältnis von Cyanurchlorid zu einem nucleophilen Polyamidamin-Stickstoff beträgt 1:6. Es wird 2 Stunden auf 80°C erwärmt und der pH bei 8,5 gehalten. Man läßt auf Raumtemperatur abkühlen, filtriert und erhält einen erfindungsgemäßen schwarzen Farbstoff mit dem Polyamidamin-freien Farbkörper der Formel 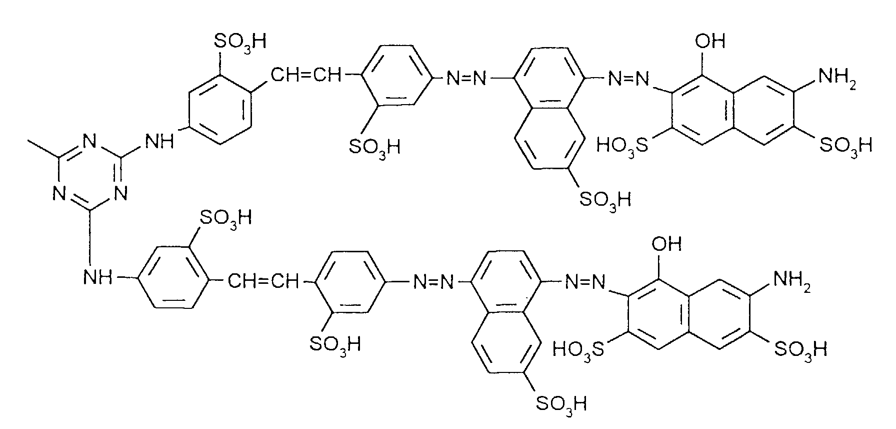 und einem λₘₐₓ-Wert von 609 nm.

### Beispiel 12

Man verfährt wie in Beispiel 11, setzt aber anstelle der Farbbase von Beispiel 11 242 g (90 %) der Farbbase der Formel 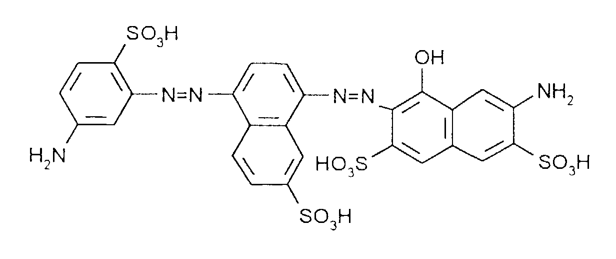 ein und verwendet 303 g Polyamidamin (das molare Verhältnis von Cyanurchlorid zu einem nucleophilen Polyamidamin-Stickstoff beträgt 1:5) aus Beispiel 1. Der Farbstoff hat ein λₘₐₓ-Wert von 604 nm.

## Patentansprüche

1. Polymere Farbstoffe, erhältlich durch Umsetzung von
A) Polyamidaminen mit einem als Gewichtsmittel bestimmten mittleren Molekulargewicht von 260 bis 10.000, die ihrerseits erhältlich sind durch Umsetzung von aliphatischen Polyaminen (I), die mindestens zwei primäre und mindestens eine sekundäre Aminogruppe enthalten, gegebenenfalls im Gemisch mit Diaminen (II), mit Dicarbonsäuren (α), mit der Maßgabe, daß das molare Verhältnis der Summe der in (I) und gegebenenfalls (II) enthaltenen primären und sekundären Aminogruppen zu den Carboxylgruppen in (α) > 1, vorzugsweise 1,05 bis 3,0 ist,
mit
B) einem Farbstoff, der pro Molekül mindestens eine gegenüber primären und sekundären Aminogruppen reaktive Gruppe enthält,
wobei das molare Verhältnis der Summe der in A) enthaltenen primären und sekundären Aminogruppen zu B) 1 bis 15, vorzugsweise 1 bis 10, beträgt.

2. Farbstoffe gemäß Anspruch 1, dadurch gekennzeichnet, daß als Polyamidamine A) solche eingesetzt werden, die erhältlich sind indem mindestens ein Polyamin der Formel (I) 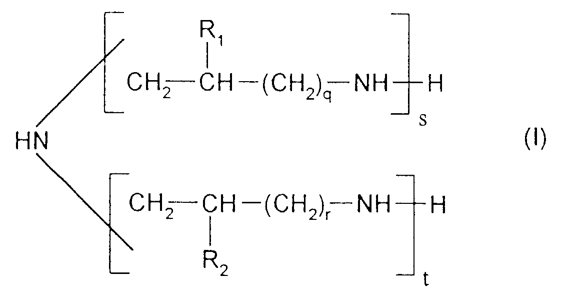
worin
R₁, R₂ unabhängig voneinander für Wasserstoff, Methyl oder Ethyl,
q, r unabhängig voneinander für 0, 1, 2, 3 oder 4 und
s, t unabhängig voneinander für 1, 2, 3, 4, 5 oder 6 stehen,
oder ein Gemisch aus mindestens einem Polyamin der Formel (I) und mindestens einem Diamin der Formel (II)
H₂N―R₃―NH₂ (II)
worin
R₃ für C₂-C₉-Alkylen oder einen zweiwertigen Rest der Formel 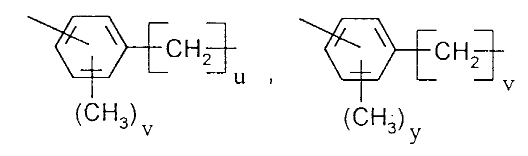 oder 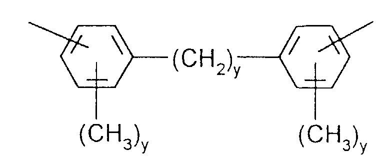 steht,
worin
u für 1 oder 2
v für 0 oder 1 und
y für 0, 1, 2 oder 3 stehen
mit mindestens einer Dicarbonsäure (α) aus der Reihe der aliphatischen gesättigten C₂-C₁₂-Dicarbonsäuren, olefinisch ungesättigten C₄-C₁₂-Dicarbonsäuren oder aromatischen Dicarbonsäuren oder deren funktionellen Derivaten und gegebenenfalls C₃-C₈-Aminocarbonsäuren oder deren Lactamen kondensiert wird.

3. Farbstoffe gemäß Anspruch 1, dadurch gekennzeichnet, daß es sich bei den Polyamidaminen A) um solche mit einem Basenäquivalentgewicht von 140 bis 800 handelt.

4. Farbstoffe gemäß Anspruch 1, dadurch gekennzeichnet, daß es sich bei den Farbstoffen B) um solche handelt, die sich von der Klasse der Phthalocyanin-, Nitroaryl-, Triphenylmethan-, Oxazin-, Triphendioxazin-, Phenazin-, Stilben-, Thiazin- und Xanthenfarbstoffe, der Anthrachinon-, Monoazo-, Disazo- und Polyazofarbstoffe sowie weiterhin der Metallkomplexfarbstoffe ableiten.

5. Farbstoffe gemäß Anspruch 1, dadurch gekennzeichnet, daß es sich bei den Farbstoffen B) um solche handelt, die als wasserlöslich-machende Gruppen unabhängig voneinander eine oder mehrere Sulfonamid-, am Stickstoff einund zweimal alkylsubstituierte Sulfonamid- Alkylsulfonyl-, Carboxyl-, Carboxylat- oder Sulfonatgruppen enthalten.

6. Farbstoffe gemäß Anspruch 1, dadurch gekennzeichnet, daß es sich bei den Farbstoffen B) um faserreaktive Farbstoffe handelt, die einen oder zwei, vorzugsweise einen Rest der Formeln
-SO₂-A, -CO-A, -SO₂-CH=CH₂
-SO₂-CH₂CH₂-A, -CO-CH₂CH₂-A, -CONH-CH₂-A,
-SO₂NH-CH₂CH₂-A, -NHCO-CH₂CH₂-A, 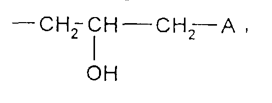 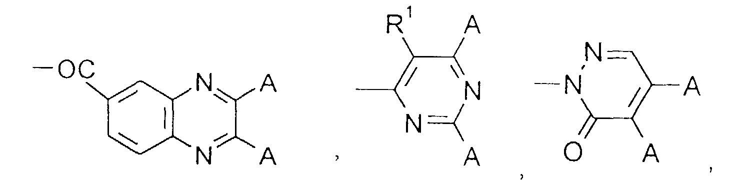 mit R¹ = H, Cl, CH₃, CN 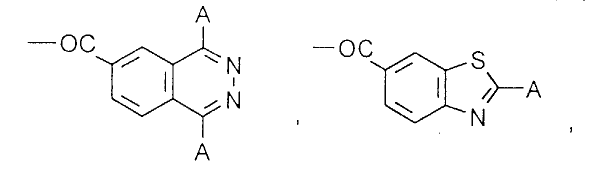 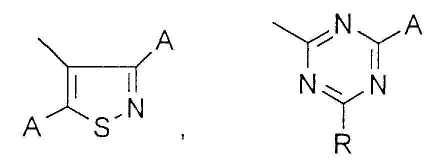 mit R = NH₂, 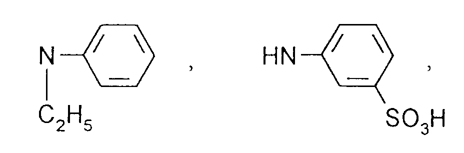 OCH₃ oder OCH₂CH₂OCH₃,
vorzugsweise 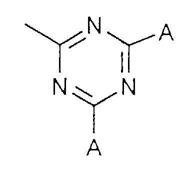 mit A = Cl, F, OSO₃H, N(CH₃)₃Cl, SO₂CH₃, OPO₃H und SO₂C₂H₅ enthalten.

7. Verfahren zum Färben und Bedrucken von cellulose- und amidgruppenhaltigen Materialien, insbesondere Papier, Baumwolle und Leder, dadurch gekennzeichnet, daß mindestens ein Farbstoff gemäß Anspruch 1 eingesetzt wird.

8. Drucktinten enthaltend mindestens einen Farbstoff gemäß Anspruch 1.

9. Drucktinten enthaltend
- 0,5 bis 20 Gew.-% eines oder mehrerer polymerer Farbstoffe gemäß Anspruch 1,
- 50 bis 99,5 Gew.-% Wasser,
- 0 bis 30 Gew.-% eines oder mehrerer organischer Lösungsmittel und
- 0 bis 30 Gew.-% Viskosität und/oder Oberflächenspannung beeinflussende Zusätze,
wobei sich die Summe der Inhaltsstoffe auf 100 % ergänzt.

10. Verwendung der Drucktinten gemäß Anspruch 8 oder 9 als Aufzeichnungsflüssigkeit für Ink-Jet-Aufzeichnungssysteme.

## Claims

1. Polymeric dyestuffs obtainable by reaction of
A) Polyamidoamines having an average molecular weight, determined as the weight-average, of 260 to 10,000, which in turn are obtainable by reaction of aliphatic polyamines (I) which contain at least two primary amino groups and at least one secondary amino group, if appropriate as a mixture with diamines (II), with dicarboxylic acids (α), with the proviso that the molar ratio of the sum of primary and secondary amino groups contained in (I) and if appropriate (II) to the carboxyl groups in (α) > 1, and is preferably 1.05 to 3.0,
with
B) a dyestuff which contains, per molecule, at least one group which is reactive towards primary and secondary amino groups,
the molar ratio of the sum of primary and secondary amino groups contained in A) to B) being 1 to 15, preferably 1 to 10.

2. Dyestuffs according to Claim 1, characterized in that the polyamidoamines A) employed are those which are obtainable by subjecting at least one polyamine of the formula (I) 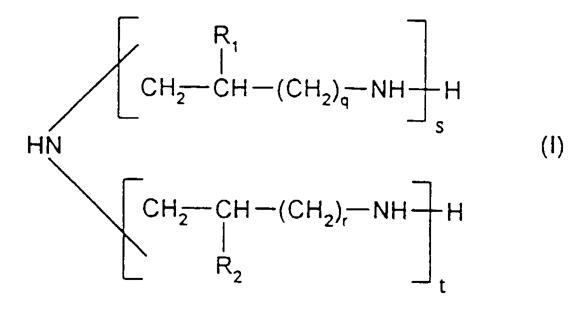 wherein
R₁ and R₂ independently of one another represent hydrogen, methyl or ethyl,
q and r independently of one another represent 0, 1, 2, 3 or 4 and
s and t independently of one another represent 1, 2, 3, 4, 5 or 6,
or a mixture of at least one polyamine of the formula (I) and at least one diamine of the formula (II)
H₂N―R₃―NH₂ (II)
wherein
R₃ represents C₂-C₉-alkylene or a divalent radical of the formula 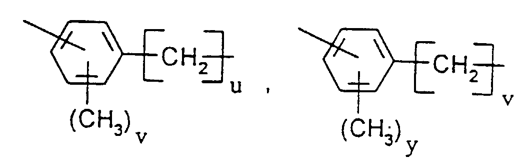 or 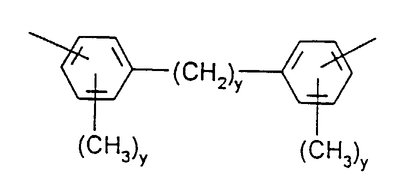 wherein
u represents 1 or 2,
v represents 0 or 1 and
y represents 0, 1, 2 or 3,
to a condensation reaction with at least one dicarboxylic acid (α) from the series consisting of aliphatic saturated C₂-C₁₂-dicarboxylic acids, olefinically unsaturated C₄-C₁₂-dicarboxylic acids and aromatic dicarboxylic acids or functional derivatives thereof, and if appropriate C₃-C₈-aminocarboxylic acids or lactams thereof.

3. Dyestuffs according to Claim 1, characterized in that the polyamidoamines A) are those having a base equivalent weight of 140 to 800.

4. Dyestuffs according to Claim 1, characterized in that the dyestuffs B) are those which are derived from the class of phthalocyanine, nitroaryl, triphenylmethane, oxazine, triphendioxazine, phenazine, stilbene, thiazine and xanthene dyestuffs, of anthraquinone, monoazo, disazo and polyazo dyestuffs and furthermore of metal complex dyestuffs.

5. Dyestuffs according to Claim 1, characterized in that the dyestuffs B) are those which contain, as groups which render them water-soluble and independently of one another, one or more sulphonamide groups, sulphonamide groups which are alkyl-substituted once or twice on the nitrogen, alkylsulphonyl groups, carboxyl groups, carboxylate groups or sulphonate groups.

6. Dyestuffs according to Claim 1, characterized in that the dyestuffs B) are fibre-reactive dyestuffs which contain one or two, preferably one radical of the formulae
-SO₂-A, -CO-A, -SO₂-CH=CH₂
-SO₂-CH₂CH₂-A, -CO-CH₂CH₂-A, -CONH-CH₂-A,
-SO₂NH-CH₂CH₂-A, -NHCO-CH₂CH₂-A, 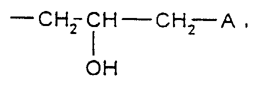 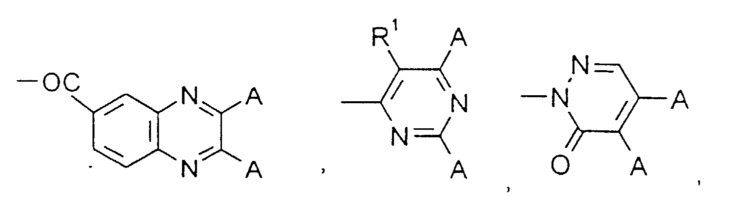 where R¹ = H, Cl, CH₃, CN 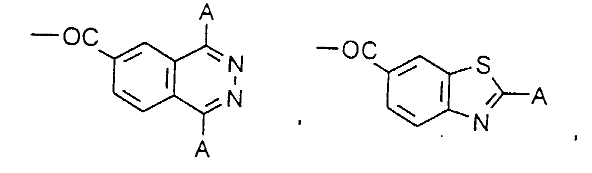 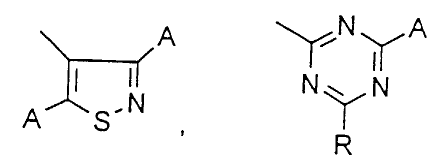 where R = NH₂ 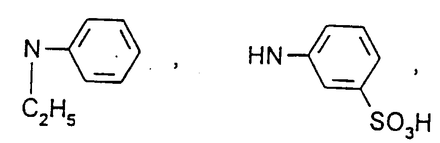 OCH₃ or OCH₂CH₂OCH₃,
preferably 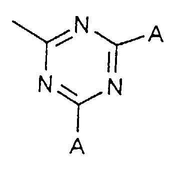 where A = Cl, F, OSO₃H, N(CH₃)₃Cl, SO₂CH₃, OPO₃H and SO₂C₂H₅.

7. Process for dyeing and printing materials containing cellulose groups and amide groups, in particular paper, cotton and leather, characterized in that at least one dyestuff according to Claim 1 is employed.

8. Printing inks comprising at least one dyestuff according to Claim 1.

9. Printing inks comprising
- 0.5 to 20% by weight of one or more polymeric dyestuffs according to Claim 1,
- 50 to 99.5% by weight of water,
- 0 to 30% by weight of one or more organic solvents, and
- 0 to 30% by weight of additives which influence viscosity and/or surface tension,
the sum of the contents adding up to 100%.

10. Use of the printing inks according to Claim 8 or 9 as a recording liquid for ink jet recording systems.

## Revendications

1. Colorants polymères, obtenus par réaction
A) de polyamideamines avec un poids moléculaire moyen en poids de 260 à 10 000, qui sont obtenues de leur part par réaction de polyamines aliphatiques (I), qui contiennent au moins deux groupes amino primaires et au moins un groupe amino secondaire, éventuellement en mélange avec des diamines (II), avec des acides dicarboxyliques (α) dans la mesure où le rapport molaire de la somme des groupes amino primaires et secondaires contenus dans (I) et éventuellement dans (Il) aux groupes carboxyle dans (α) >1, de préférence de 1,05 à 3,0,
avec
B) un colorant qui contient par molécule au moins un groupe réactif avec des groupes amino primaires et secondaires,
le rapport molaire de la somme des groupes amino primaires et secondaires contenus dans A) à B) étant de 1 à 15, de préférence de 1 à 10.

2. Colorants selon la revendication 1, caractérisés en ce que l'on utilise comme polyamideamines (A) celles qui sont obtenues en ce que l'on condense au moins une polyamine de la formule (I) 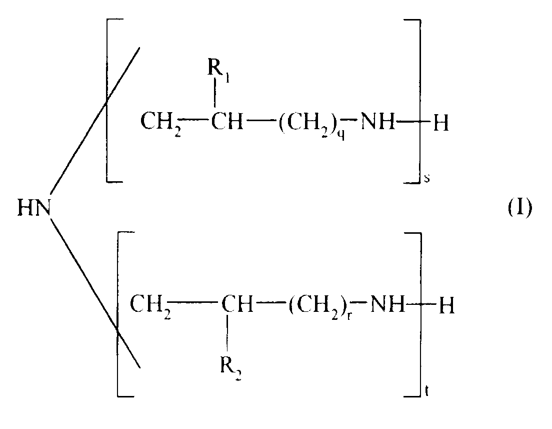 dans laquelle
R₁, R₂ représentent indépendamment un atome d'hydrogène, un groupe méthyle ou éthyle,
q, r représentent indépendamment 0, 1, 2, 3 ou 4 et
s, t représentent indépendamment 1, 2, 3, 4, 5 ou 6,
ou un mélange d'au moins une polyamine de la formule (I) et d'au moins une diamine de la formule (II)
H₂N―NH₂ (II)
dans laquelle
R₃ représente un groupe alkylène en C₂-C₉ ou un reste bivalent des formules 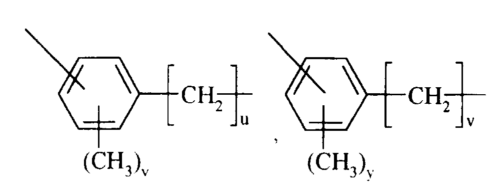 ou 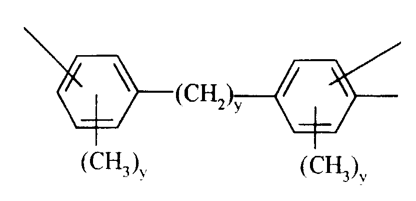 dans lesquelles
u représente 1 ou 2
v représente 0 ou 1 et
y représente 0, 1, 2 ou 3
avec au moins un acide dicarboxylique (α) de la série des acides dicarboxyliques en C₂-C₁₂ aliphatiques saturés, des acides dicarboxyliques en C₄-C₁₂ oléfiniquement insaturés ou des acides dicarboxyliques aromatiques ou de leurs dérives fonctionnels et éventuellement des acides aminocarboxyliques en C₃-C₈ ou de leurs lactames.

3. Colorants selon la revendication 1, caractérisés en ce qu'il s'agit pour les polyamideamines A) de celles avec un poids équivalent de base de 140 à 800.

4. Colorants selon la revendication 1, caractérisés en ce qu'il s'agit pour les colorants B) de ceux qui sont dérivés de la classe des colorants de phtalocyanine, de nitroaryle, de triphénylméthane, d'oxazine, de triphènedioxazine, de phénazine, de stilbène, de thiazine et de xanthène, des colorants d'anthraquinone, monoazo, disazo et polyazo ainsi qu'en outre des colorants de complexes métalliques.

5. Colorants selon la revendication 1, caractérisés en ce qu'il s'agit pour les colorants B) de ceux qui contiennent comme groupes les rendant solubles dans l'eau indépendamment un ou plusieurs groupes sulfonamide, groupes sulfonamide, alkylsulfonyle, carboxyle, carboxylate ou sulfonate une et deux fois substitués sur l'azote par un groupe alkyle.

6. Colorants selon la revendication 1, caractérisés en ce qu'il s'agit pour les colorants B) de colorants réactifs avec des fibres qui contiennent un ou deux, de préférence un reste des formules
-SO₂-A, -CO-A, -SO₂-CH=CH₂
-SO₂-CH₂CH₂-A, -CO-CH₂CH₂-A, -CONH-CH₂-A,
-SO₂NH-CH₂CH₂-A, -NHCO-CH₂CH₂-A, 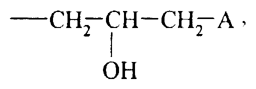 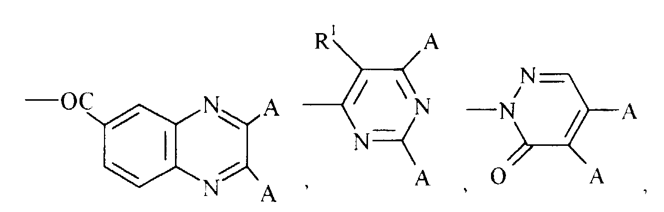 avec R¹ = H, Cl, CH₃, CN 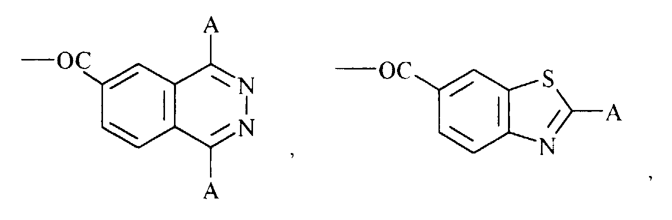 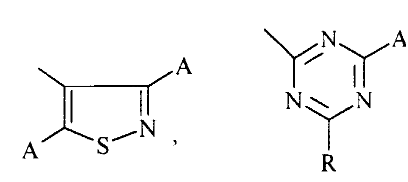 avec R = NH₂ 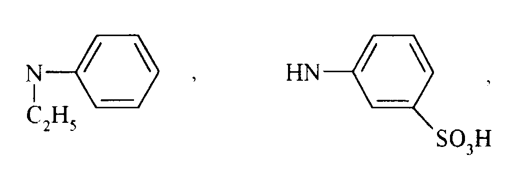 OCH₃ ou OCH₂CH₂OCH₃,
de préférence 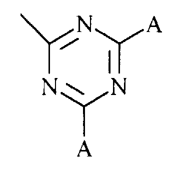 avec A = Cl, F, OSO₃H, N(CH₃)₃Cl, SO₂CH₃, OPO₃H, et SO₂C₂H₅ .

7. Procédé pour la coloration et l'impression de matériaux contenant des groupes cellulose et amide, en particulier de papier, de coton et de cuir, caractérisé en ce que l'on utilise au moins un colorant selon la revendication 1.

8. Encres d'impression contenant au moins un colorant selon la revendication 1.

9. Encres d'impression contenant
- de 0,5 à 20% en poids d'un ou plusieurs colorants polymères selon la revendication 1,
- de 50 à 99,5 % en poids d'eau,
- de 0 à 30% en poids d'un ou plusieurs solvants organiques et
- de 0 à 30% en poids d'additifs ayant une influence sur la viscosité et/ou la tension superficielle,
la somme des matières contenues étant de 100%.

10. Utilisation des encres d'impression selon la revendication 8 ou 9 comme liquide d'enregistrement pour des systèmes d'enregistrement à jet d'encre.
